# EUROPÄISCHE PATENTSCHRIFT

(11) **EP 2 239 494 B1**
(45) Veröffentlichungstag und Bekanntmachung des Hinweises auf die Patenterteilung: **07.12.2016**
(21) Anmeldenummer: 10158995.0
(22) Anmeldetag: 01.04.2010
(51) Int. Cl.: F21S 6/00, F21S 8/00, F21V 23/04, H05B 37/02

(54) **Anordnung zur Raumbeleuchtung**
Assembly for lighting room
Agencement destiné à l'éclairage ambiant

(30) Priorität: 07.04.2009 DE 102009016753
(43) Veröffentlichungstag der Anmeldung: 13.10.2010
(73) Patentinhaber: Zumtobel Lighting GmbH, 6850 Dornbirn (AT)
(72) Erfinder: Menke, Mathias, 6971 Hard (AT)
(74) Vertreter: Thun, Clemens

(56) Entgegenhaltungen:
- WO-A1-2008/146232
- DE-A1- 3 205 497
- DE-A1- 10 004 613
- DE-A1- 19 609 262
- DE-U1- 20 205 725
- FR-A1- 2 775 515
- US-A1- 2008 285 281
- US-B1- 7 052 157

## Beschreibung

Die vorliegende Erfindung betrifft eine Anordnung zur Raumbeleuchtung, mit deren Hilfe insbesondere eine optimale Ausleuchtung von Arbeitsplätzen ermöglicht werden soll.

Insbesondere bei der Ausleuchtung von Räumen, in denen sich Bildschirmarbeitsplätze befinden, werden an die Beleuchtung mittels Kunstlicht besondere Anforderungen gestellt, um ein angenehmes Arbeiten zu ermöglichen. Hierzu wurden verschiedene Verordnungen und Normen entwickelt, welche sich mit der Problematik der Ausleuchtung von Arbeitsplätzen auseinander setzen. Diese Normen basieren unter anderem auf verschiedenen Beleuchtungskonzepten, welche nachfolgend kurz erläutert werden sollen.

Beim Konzept der so genannten raumbezogenen Beleuchtung geht es um die gleichmäßige Beleuchtung des gesamten Raums. Die Beleuchtung hat hier dafür zu sorgen, dass überall in dem Raum gleiche Sehbedingungen herrschen. In solchen Räumen könnten Bildschirmarbeitsplätze fast beliebig aufgestellt werden, wobei sich allerdings ggf. Einschränkungen durch die Fensteranordnung ergeben.

Ein weiteres Konzept der so genannten arbeitsplatz- bzw. arbeitsflächenbezogenen Beleuchtung hingegen verlangt, dass die verschiedenen Arbeitsbereiche und deren Umgebung gesondert beleuchtet und unterschiedlich stark beleuchtet werden. Hier sollen also die Arbeitsbereiche im Vergleich zur Umgehung des Raums stärker beleuchtet werden, wobei im Vergleich zu einer raumbezogenen Beleuchtung, bei der eine Helligkeit von etwa 300 Lux angestrebt wird, bei der arbeitsplatz- bzw. arbeitsflächenbezogenen Beleuchtung eine Helligkeit von 500 Lux erwünscht ist.

Schließlich findet oftmals auch noch das Konzept der so genannten teilflächenbezogenen Beleuchtung Anwendung, bei der über die bereits hellere arbeitsbereichsbezogene Beleuchtung hinaus die Möglichkeit geschaffen wird, einzelne Arbeitsbereiche individuell verstärkt zu beleuchten. Es handelt es sich überwiegend um kleinere Bereiche, in denen dann vorzugsweise eine Helligkeit von 750 Lux vorliegen sollte, um das Sehvermögen in diesen Bereichen bspw. beim Lesen von Unterlagen gezielt zu unterstützen.

Eine Zusammenführung dieser drei verschiedenen Beleuchtungskonzepte wäre wünschenswert, ist allerdings mit einem hohen Aufwand verbunden. Insbesondere ist es selbstverständlich für einen Benutzer der Beleuchtungsanordnung unbefriedigend, wenn er jeweils eine Einstellung der verschiedenen Lichtarten vorzunehmen hat, um letztendlich eine gewünschte Ausleuchtung des Raums zu erzielen. Auch ist in diesem Fall eine Anpassung der Beleuchtung an geänderte räumliche Verhältnisse nur schwer durchführbar.

Das Dokument DE 23 05 497 wird als nächster Stand der Technik angesehen und offenbart alle Merkmale des Oberbegriffs des Anspruchs 1.

Der vorliegenden Erfindung liegt dementsprechend die Aufgabe zugrunde, ein neuartiges Konzept zur Raumbeleuchtung vorzuschlagen, welches einerseits von einem Benutzer komfortabel zu bedienen ist und andererseits die Möglichkeit eröffnet, die Beleuchtung in einfacher Weise an neue Gegebenheit anzupassen.

Die Aufgabe wird durch eine Anordnung zur Raumbeleuchtung gemäß Anspruch 1 sowie durch ein Verfahren zum Beleuchten eines Raums gemäß Anspruch 5 gelöst. Vorteilhafte Weiterbildungen der Erfindung sind Gegenstand der abhängigen Ansprüche.

Die erfindungsgemäße Lösung beruht auf dem Gedanken, eine Beleuchtungsanordnung mit Hilfe einer oder mehrerer Stehleuchten zu realisieren, wobei die Leuchten derart ausgestaltet sind, dass sie jeweils einzeln oder in ihrer Gesamtheit eine raumbezogene Beleuchtung, eine arbeitsflächenbezogene Beleuchtung sowie eine teilflächenbezogene Beleuchtung ermöglichen. Hierbei ist vorgesehen, dass der von den Leuchten abgegebene Lichtanteil, der zur raumbezogenen Beleuchtung benutzt wird, zentral gesteuert ist, während hingegen der zur teilflächenbezogenen Beleuchtung genutzte Lichtanteil durch den Benutzer steuerbar ist.

Erfindungsgemäß wird dementsprechend eine Anordnung zur Raumbeleuchtung vorgeschlagen, welche ein oder mehrere Stehleuchten aufweist, die jeweils einzeln oder in ihrer Gesamtheit dazu ausgebildet sind, einen ersten Lichtanteil indirekt abzugeben, einen zweiten Lichtanteil großflächig direkt abzugeben und einen dritten Lichtanteil im Wesentlichen gebündelt direkt abzugeben, wobei der erste Lichtanteil zentral gesteuert ist, während hingegen der dritte Lichtanteil durch einen Benutzer steuerbar ist.

Dadurch, dass der indirekt abgegebene erste Lichtanteil, der für die raumbezogene Beleuchtung genutzt wird, zentral gesteuert ist, reduzieren sich die Bedienmöglichkeiten bzw. erforderlichen Bedienungen für den Benutzer des Systems auf wenige Einstellmöglichkeiten, die allerdings die gewünschte individuelle Ausleuchtung einzelner Teilflächen des Arbeitsbereichs ermöglichen. Der Benutzer kann dementsprechend jederzeit die Beleuchtung seines Arbeitsplatzes individuell einstellen während hingegen die gesamte Ausleuchtung des Raums automatisiert erfolgt. Hierdurch wird der Bedienkomfort des gesamten Systems deutlich erhöht. Da ferner die erfindungsgemäße Ausleuchtung des Raums mit Hilfe von Stehleuchten realisiert wird, kann die Beleuchtung in einfacher Weise durch Verschieben der Leuchten an neue räumliche Gegebenheit angepasst werden.

Der für die arbeitsflächenbezogene Beleuchtung genutzte zweite Lichtanteil, der großflächig direkt abgestrahlt wird, wird vorzugsweise ebenfalls automatisiert gesteuert. Beispielsweise könnte dieser Lichtanteil über einen Anwesenheits- oder Bewegungssensor gesteuert werden. Auch eine umgebungs- bzw. tageslichtabhängige Steuerung wäre alternativ oder ergänzend denkbar. Derartige Maßnahmen tragen zusätzlich zu einer komfortablen Nutzung des Systems bei.

Gemäß der Erfindung wird ferner ein Verfahren zum Beleuchten eines Raums mit einer oder mehreren Stehleuchten vorgeschlagen, deren Licht in zumindest drei Anteilen abgegeben wird, wobei ein erster Lichtanteil zur indirekten Lichtabgabe vorgesehen ist, ein zweiter Lichtanteil zur großflächigen direkten Lichtabgabe vorgesehen ist und ein dritter Lichtanteil zur direkten, im Wesentlichen gebündelten Lichtabgabe vorgesehen ist, und wobei der erste Lichtanteil zentral gesteuert ist, während hingegen der dritte Lichtanteil durch einen Benutzer steuerbar ist.

Nachfolgend soll die Erfindung anhand der beiliegenden Zeichnung näher erläuter werden. Es zeigen:
- Fig. 1: schematisch einen Raum mit darin befindlichen Bildschirmarbeitsplätzen sowie einer erfindungsgemäßen Anordnung zur Raumbeleuchtung;
- Fig. 2 bis 5: ein Ausführungsbeispiel einer Stehleuchte, die bei der erfindungsgemäßen Anordnung zur Raumbeleuchtung zum Einsatz kommen könnte.

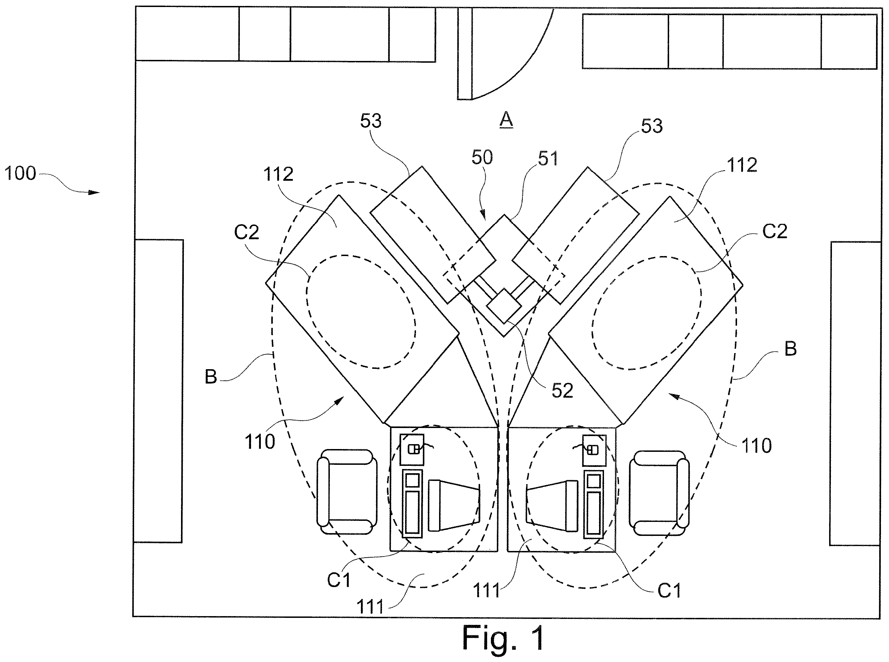

In dem in Fig. 1 schematisch dargestellten Raum 100 sind zwei Schreibtische 110 angeordnet. Diese Schreibtische 110 weisen jeweils einen Bildschirmarbeitsplatz 111 mit einem PC sowie zugehörigen Peripherie-Geräten auf. Ferner ist jeweils ein zweiter Bereich 112 vorgesehen, der bspw. für Besprechungen oder zum Lesen von Unterlagen genutzt wird. Sowohl an dem Bildschirmarbeitsplatz 111 als auch an dem Lese- bzw. Besprechungsbereich 112 sollte - sofern diese Bereiche genutzt werden - eine verstärkte Beleuchtung vorliegen, um das Arbeiten so angenehm wie möglich zu gestalten.

Das Konzept der erfindungsgemäßen Beleuchtungsanordnung sieht nunmehr vor, dass die gesamte Ausleuchtung des Raums 100 in drei Abstufungen erfolgt.

So sollte zunächst der Raum 100 in seiner Gesamtheit mit einer gewissen Grundhelligkeit ausgeleuchtet werden. Diese sog. raumbezogene Beleuchtung in dem Bereich A, der die gesamte Fläche des Raums umfasst, sollte möglichst für eine Helligkeit im Bereich von etwa 300 Lux sorgen.

Zusätzlich zu dieser allgemeinen raumbezogenen Beleuchtung sollte ferner ein jeweils in etwa einen Schreibtisch 110 umfassender Bereich B verstärkt beleuchtet werden, wobei bei dieser so genannten arbeitsbereichsbezogenen Beleuchtung eine Helligkeit von etwa 500 Lux angestrebt wird.

Je nach Wunsch des Benutzers sollte dann auch der Bildschirmarbeitsbereich C1 bzw. der Lese- bzw. Besprechungsbereich C2 gezielt ausgeleuchtet werden, sofern hier Arbeiten stattfinden. Für diese Teilflächen C1, C2 sollte im Bedarfsfall dann eine Helligkeit von 750 Lux erzielt werden.

Um eine derartige Beleuchtung zu realisieren, wird vorgeschlagen, ein oder mehrere Stehleuchten zu verwenden, die wie nachfolgend beschrieben in bestimmter Weise ausgestaltet sind und angesteuert werden können. Im dargestellten Ausführungsbeispiel ist hierzu im Bereich zwischen beiden Schreibtischen 110 eine Stehleuchte 50 vorgesehen, welche einen Leuchtenfuß 51 aufweist, von dem sich eine Säule 52 vertikal nach oben erstreckt. Im oberen Bereich der Säule 52 sind nunmehr zwei Leuchtenköpfe 53 angeordnet, mit deren Hilfe das zuvor beschriebene Beleuchtungskonzept realisiert wird.

Ein denkbares Ausführungsbeispiel eines Leuchtenkopfs 53 wird nachfolgend noch näher erläutert. Vorab ist anzumerken, dass die Leuchtenköpfe 53 im vorliegenden Fall derart ausgebildet sind, dass das von der Leuchte 50 abgegebene Licht in drei Lichtanteile aufgespaltet wird. Ein erster Lichtanteil, der zur raumbezogenen Beleuchtung genutzt wird, wird hierbei indirekt abgegeben, also nach oben in Richtung der Decke des Raums abgestrahlt 100. Auf diese Weise kann eine sehr gleichmäßige Aufhellung des Raums 100 bei verhältnismäßig geringer Helligkeit erzielt werden. Ein zweiter Lichtanteil wiederum wird großflächig über die Leuchtenköpfe 53 zur Unterseite hin, also direkt abgegeben. Mit Hilfe dieser großflächigen Ausleuchtung werden dann die Bereiche B im Sinne einer arbeitsbereichsbezogenen Beleuchtung gezielt aufgehellt werden, wobei hierbei Helligkeiten von etwa 500 Lux erhalten werden. Schließlich erfolgt über die Leuchtenköpfe 53 auch noch eine gebündelte Lichtabgabe zur Unterseite hin, also wiederum direkt, um je nach Wunsch den PC-Arbeitsplatz C1 oder den Besprechungsbereich C2 aufzuhellen. Letztendlich werden also die Teilflächen C1, C2 gezielt mit einer sehr hohen Helligkeit ausgeleuchtet, wobei dann zur Umgebung hin die Helligkeit in mehreren Stufen abnimmt. Im Hinblick auf die Helligkeit wird hierdurch eine besonders angenehme Arbeitsatmosphäre erzielt.

Anzumerken ist, dass im dargestellten Ausführungsbeispiel jeder der beiden Leuchtenköpfe 53 dazu ausgebildet ist, Licht in den drei zuvor beschriebenen Anteilen abzugeben, also einerseits indirekt sowie andererseits großflächig direkt und gebündelt direkt Licht abzustrahlen. Denkbar wäre allerdings auch, eine Vielzahl von Stehleuchten einzusetzen, welche nur zur Realisierung einzelner der verschiedenen Beleuchtungskonzepte genutzt werden. Beispielsweise könnten einzelne Stehleuchten ausschließlich zur indirekten Lichtabgabe zur Realisierung der raumbezogenen Beleuchtung genutzt werden, während hingegen im Bereich der Arbeitsplätze Stehleuchten eingesetzt werden, die einerseits die arbeitsbereichsbezogene Beleuchtung und andererseits die teilflächenbezogene Beleuchtung realisieren. Wesentlich ist, dass die Leuchten in ihrer Gesamtheit Licht in den drei zuvor beschriebenen Wegen abstrahlen.

Eine Besonderheit des erfindungsgemäßen Systems besteht nunmehr darin, dass ein Benutzer der Beleuchtungsanordnung nur auf einen bestimmten Bereich der Lichtabgabe manuell Einfluss nehmen kann. So ist vorgesehen, dass in erster Linie der Lichtanteil, der zur teilflächenbezogenen Beleuchtung, also zur Ausleuchtung der Bereiche C1 und C2 genutzt wird, durch den Benutzer steuerbar ist. Der Lichtanteil für die raumbezogene Beleuchtung hingegen ist zentral gesteuert und kann durch den Benutzer nicht beeinflusst werden. Für die arbeitsflächenbezogene Beleuchtung bestehen mehrere Möglichkeiten, die nachfolgend noch näher erläutert werden.

Bezüglich des zentral gesteuerten Lichtanteils für die raumbezogene Beleuchtung ist vorgesehen, dass die Stehleuchten mit einer zentralen Steuereinheit gekoppelt sind, welche die Leuchten in geeigneter Weise ansteuert. Die indirekte Lichtabgabe kann dabei von der Tageszeit und/oder der Umgebungshelligkeit abhängig sein. In jedem Fall ist eine Ansteuerung derart wünschenswert, dass eine gleichmäßige und über die Zeit hinweg konstante Ausleuchtung des Raums 100 erzielt wird. Dadurch, dass hierfür die Ansteuerung der Leuchten automatisiert vorgenommen wird, entfällt ein mühsames Nachregeln für den Benutzer der Beleuchtungsanordnung.

Auf der anderen Seite kann der Benutzer dann je nach Art der Tätigkeit die teilflächenbezogene Beleuchtung aktivieren bzw. einstellen. Die Möglichkeiten für den Benutzer umfassen hierbei u.a. das einfache Ein- und Ausschalten sowie ggf. auch eine entsprechende Richtungsänderung der Lichtabgabe, sofern dies gewünscht ist. Denkbar wäre auch, dass für den Benutzer die Möglichkeit besteht, bei der teilflächenbezogenen Beleuchtung eine Helligkeitseinstellung vorzunehmen, also die gebündelte Lichtabgabe je nach Wunsch zu dimmen, um diese Art der Beleuchtung individuellen Wünschen anzupassen.

Vorzugsweise ist auch der für die Ausleuchtung der Schreibtische genutzte Lichtanteil zur arbeitsflächenbezogenen Beleuchtung automatisiert gesteuert. Denkbare wäre insbesondere die Nutzung von Anwesenheits- oder Bewegungssensoren, über die eine Anwesenheit einer Person im Bereich des Schreibtischs ermittelt wird. Der hierbei abgegebene Lichtanteil kann dabei umgebungs- bzw. tageslichtabhängig sein, um die gewünschte Ausleuchtung mit etwa 500 Lux zu erzielen. Dadurch, dass auch dieser zweite Lichtanteil automatisiert gesteuert ist, reduzieren sich also die für den Benutzer vorzunehmenden Einstellungen auf ein Minimum, wodurch eine besonders komfortable Nutzung des Beleuchtungssystems geschaffen wird. Gleichzeitig wird allerdings eine Ausleuchtung des gesamten Raums in einer Art erzielt, welche ein besonders angenehmes Arbeiten ermöglicht.

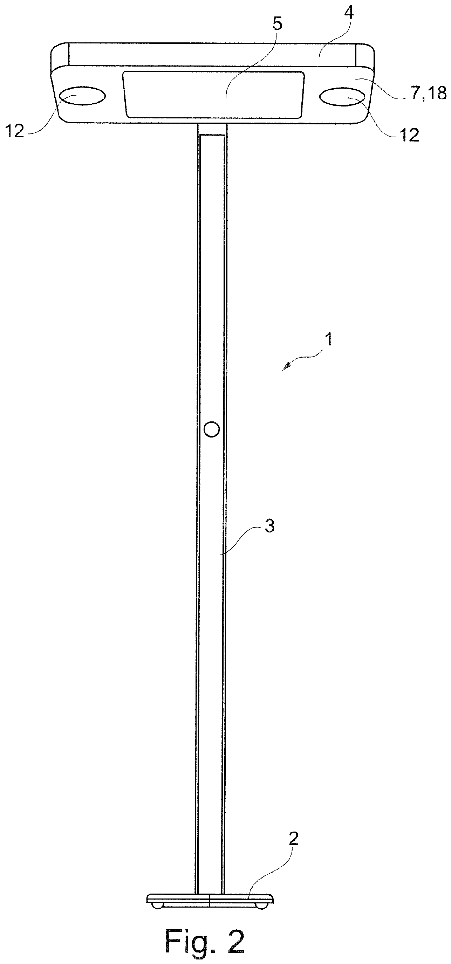

Eine denkbare Leuchte, die bei dem erfindungsgemäßen Beleuchtungssystem zum Einsatz kommen kann, soll nachfolgend anhand der Fig. 2 bis 5 erläutert werden. Die dargestellte Leuchte 1 weist einen Leuchtenfuß 2 sowie eine sich von dem Leuchtenfuß 2 noch oben erstreckende Leuchtensäule 3 auf. Am oberen Ende der Leuchtensäule 3 befindet sich ferner ein Leuchtenkopf 4, wobei - wie in Fig. 1 gezeigt - auch mehrere Leuchtenköpfe 4 an der Säule 3 angeordnet sein könnten.

Nachfolgend noch erläuterte erste Lichtmittel der Leuchte 1 strahlen zunächst Licht über eine Lichtabstrahlfläche 5 des Leuchtenkopfs 4 großflächig zur Unterseite hin ab, werden als für die arbeitsflächenbezogene Beleuchtung genutzt. Ferner tritt das Licht von weiteren Lichtmitteln aus den kreisförmigen Zonen 12 der Unterseite im Wesentlichen gebündelt aus und dient somit zur teilflächenbezogenen Beleuchtung. Des Weiteren wird von dritten Lichtmitteln Licht nach oben als Indirektbeleuchtung abgestrahlt, um eine raumbezogenen Beleuchtung zu realisieren.

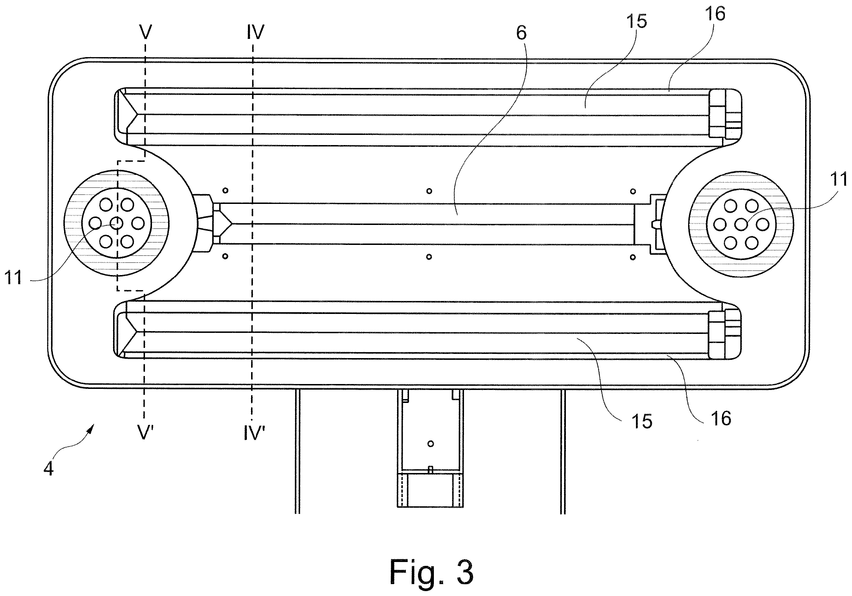

Fig. 3 zeigt eine schematische Darstellung des Leuchtenkopfs 4 von der Oberseite her. Das Bezugszeichen 6 bezeichnet hierbei die ersten Lichtmittel. Bei dem dargestellten Beispiel handelt es sich bei den ersten Lichtmitteln 6 um eine Kompaktleuchtstofflampe. Alternativ sind auch andere Beleuchtungsarten denkbar, so könnten beispielsweise Leuchtdioden als erste Lichtmittel eingesetzt werden. In diesem Fall wäre es auch denkbar, dass die Leuchtdioden seitlich in einen Lichtleiter Licht einkoppeln, über dessen Unterseite dann wiederum großflächig Licht abgegeben werden kann.

Das von den ersten Lichtmitteln erzeugt Licht wird über die Lichtabstrahlfläche 5 zur Unterseite des Leuchtenkopfs 4 abgestrahlt. An der Unterseite des Leuchtenkopfs 4 befindet sich ein vorzugsweise ebenes Lichtbeeinflussungselement 7. In dem hier gezeigten Ausführungsbeispiel handelt es sich bei dem Lichtbeeinflussungselement 7 um eine Lichtaustrittsscheibe 18, welche die Unterseite des Leuchtenkopfs 4 vollständig abschließt.

Das Lichtbeeinflussungselement 7 ist mit einer Beschichtung bedruckt, welche in unterschiedliche Zonen aufgeteilt ist. Die Bedruckung bildet einen großen lichtdurchlässigen Bereich, welcher vorzugsweise mittig auf der Unterseite des Leuchtenkopfs 4 angeordnet ist und die Lichtabstrahlfläche 5 für das Licht der ersten Lichtmittel 6 darstellt. Das Lichtbeeinflussungselement 7 dient ferner zur Entblendung des Lichts der ersten Lichtmittel 6. Zu diesem Zweck weist das Lichtbeeinflussungselement 7 eine Prismenstruktur, insbesondere eine Mikroprismenstruktur, auf. Alternativ kann es sich bei dem Lichtbeeinflussungselement 7 auch um eine diffus streuende Scheibe handeln.

Des Weiteren weist der erfindungsgemäße Leuchtenkopf 4 zweite Lichtmittel 11 auf, deren Licht gebündelt zur Unterseite hin abgegeben wird, wobei die Lichtabstrahlrichtung der zweiten Lichtmittel 11 veränderbar ist. Bei diesen zweiten Lichtmitteln 11 handelt es sich bei den hier dargestellten Ausführungsbeispielen um verstellbare Leuchtdioden-Strahler 11. In Fig. 3 sind zwei Strahler 11 dargestellt, die jeweils an einer Seite der in Fig. 3 nicht dargestellten Lichtabstrahlfläche 5 angeordnet sind.

Die Bedruckung der Unterseite des Leuchtenkopfs 4 weist vor den LED-Strahlern 11 eine lichtdurchlässige, vorzugsweise kreisförmige Zone 12 auf. Diese Zonen sind beispielsweise in Fig. 2 zu sehen. Alternativ ist es natürlich auch möglich, den Leuchtenkopf 4 nur mit einem LED-Strahler 11 oder mit zwei nebeneinander angeordneten LED-Strahlern 11 auf einer Seite der Lichtabstrahlfläche 5 auszustatten. Es ist ferner auch möglich, andere Lichtquellen zur gerichteten Lichtabgabe einzusetzen.

Die Unterseite des Leuchtenkopfs 4 ist eben und nahezu rahmenlos gefasst. Dementsprechend ist in diesem Fall eine Vorrichtung 13 zur Veränderung der Abstrahlrichtung der zweiten Lichtmittel 11 nicht an der Unterseite, sondern an der Oberseite 9 der Leuchte 1 angebracht. Hierzu sind die Strahler 11 mit einer Vorrichtung 13 zum Verschwenken verbunden, wobei an der Oberseite 9 des Leuchtenkopfs ein Griff 14 herausragt, mit dem die Vorrichtung 13 bedient werden kann.

Der Leuchtenkopf 4 weist ferner dritte Lichtmittel 15 auf, denen eine Reflektoranordnung 16 zugeordnet ist, über die Licht ausschließlich zur Oberseite 9 hin abgestrahlt wird. Das zur Oberseite 9 der Leuchte abgestrahlte Licht soll dann als Indirektbeleuchtung eine Decke anstrahlen und auf diese Weise den gesamten Raum erhellen. Bei dem dritten Lichtmittel 15 handelt es sich in dem gezeigten Ausführungsbeispiel um zwei Kompaktleuchtstofflampen 15, die parallel zu der Kompaktleuchtstofflampe 6, welche als erstes Lichtmittel verwendet wird, angeordnet sind.

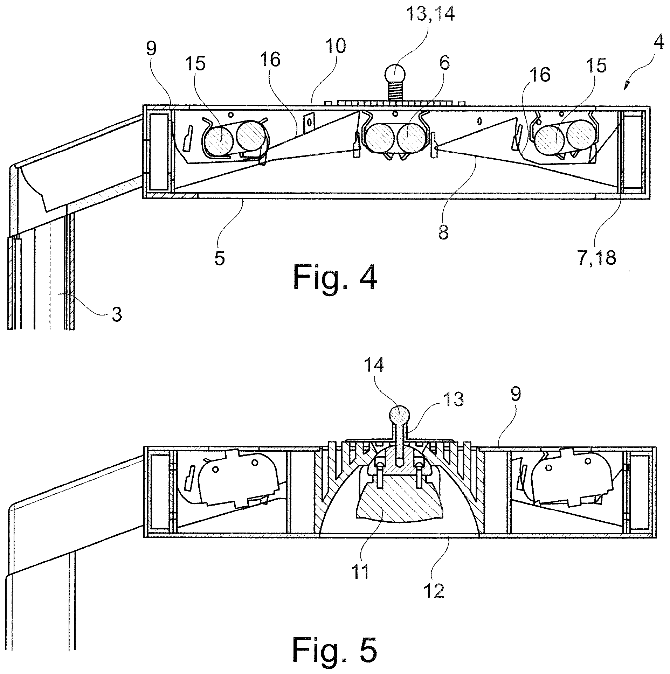

Fig. 4 zeigt ferner einen Querschnitt durch den in Fig. 3 dargestellten Leuchtenkopf 4 entlang der Linie IV-IV'. In diesem Querschnitt ist erkennbar, dass neben den ersten Lichtmitteln 6 ein Reflektor 8 angeordnet ist. Dieser Reflektor 8 reflektiert das von den ersten Lichtmittel 6 unter sehr flachen Winkeln abgestrahlte Licht in Richtung der Lichtabstrahlfläche 5.

Ferner weist die Oberseite 9 des Leuchtenkopfs 4 eine Öffnung 10 zur Lichtabgabe auf. Durch diese Öffnung 10 wird ein Teil des Lichts der ersten Lichtmittel 6 zur Oberseite 9 hin abgestrahlt wird, um den über der Leuchte befindlichen Deckenbereich aufzuhellen. Der Leuchtenkopf 4 ist allerdings derart konstruiert, dass der Grossteil des von den ersten Lichtmitteln 6 erzeugten Lichts nach unten abgestrahlt wird. In diesem Fall wird das von den dritten Lichtmitteln 15 zur Indirektbeleuchtung erzeugte Licht durch das von den ersten Lichtmitteln 6 nach oben abgestrahlte Licht verstärkt.

Fig. 5 zeigt einen Querschnitt durch den in Fig. 3 dargestellten Leuchtenkopf 4 entlang der Linie V-V'. In dieser Figur ist ebenfalls die Vorrichtung 13 erkennbar, mit der die Ausrichtung des LED-Strahlers 11 durch einen Benutzer manuell geändert werden kann. Zu diesem Zweck kann ein Benutzer den an der Oberseite des Leuchtkopfes 4 angebrachten Griff 14 zur Seite bewegen. Diese Bewegung des Griffs 14 wird von der Vorrichtung 13 in eine entsprechende Bewegung des LED-Strahlers 11 umgewandelt.

Die in den Fig. 2 bis 5 dargestellte Leuchte stellt - wie bereits erwähnt - lediglich ein denkbares Ausführungsbeispiel einer Leuchte dar, die bei dem erfindungsgemäßen System genutzt werden kann, wobei sich die Leuchte dadurch auszeichnet, dass sie Licht in allen drei Anteilen abgibt. Allerdings wäre es nicht erforderlich, generell Leuchten einzusetzen, welche Licht in allen drei unterschiedlichen Arten abstrahlen. Dementsprechend könnten auch unterschiedliche Stehleuchten genutzt werden. Generell wird allerdings durch den Einsatz der Stehleuchten die Möglichkeit geschaffen, die Ausleuchtung des Raums in einfacher und flexibler Weise an neue Gegebenheiten anzupassen.

## Patentansprüche

1. Anordnung zur Raumbeleuchtung, aufweisend
eine oder mehrere Stehleuchten (50), welche jeweils einzeln oder in ihrer Gesamtheit dazu ausgebildet sind
a) einen ersten Lichtanteil indirekt abzugeben,
b) einen zweiten Lichtanteil großflächig direkt abzugeben und
c) einen dritten Lichtanteil im Wesentlichen gebündelt direkt abzugeben,
**dadurch gekennzeichnet, dass**
der erste Lichtanteil zentral gesteuert ist, während hingegen der dritte Lichtanteil durch einen Benutzer individuell steuerbar ist.

2. Anordnung zur Raumbeleuchtung nach Anspruch 1,
**dadurch gekennzeichnet,**
**dass** der erste Lichtanteil umgebungs- bzw. tageslichtabhängig gesteuert ist.

3. Anordnung zur Raumbeleuchtung nach Anspruch 1 oder 2,
**dadurch gekennzeichnet,**
**dass** der zweite Lichtanteil ebenfalls automatisiert gesteuert ist.

4. Anordnung zur Raumbeleuchtung nach Anspruch 3,
**dadurch gekennzeichnet,**
**dass** der zweite Lichtanteil über einen Anwesenheitssensor gesteuert ist.

5. Anordnung zur Raumbeleuchtung nach Anspruch 3 oder 4,
**dadurch gekennzeichnet,**
**dass** der zweite Lichtanteil umgebungs- bzw. tageslichtabhängig gesteuert ist.

6. Anordnung zur Raumbeleuchtung nach einem der vorherigen Ansprüche,
**dadurch gekennzeichnet,**
**dass** der dritte Lichtanteil in seiner Intensität und/oder Richtung durch den Benutzer veränderbar ist.

7. Verfahren zum Beleuchten eines Raums (100) mit einer oder mehreren Stehleuchten (50), deren Licht in zumindest drei Anteilen abgegeben wird, wobei
a) ein erster Lichtanteil zur indirekten Lichtabgabe vorgesehen ist,
b) ein zweiter Lichtanteil zur großflächigen direkten Lichtabgabe vorgesehen ist und
c) ein dritter Lichtanteil zur direkten, im Wesentlichen gebündelten Lichtabgabe vorgesehen ist,
**dadurch gekennzeichnet, dass**
der erste Lichtanteil zentral gesteuert ist, während hingegen der dritte Lichtanteil durch einen Benutzer individuell steuerbar ist.

8. Verfahren nach Anspruch 7,
**dadurch gekennzeichnet,**
**dass** der erste Lichtanteil umgebungs- bzw. tageslichtabhängig gesteuert ist.

9. Verfahren nach Anspruch 7 oder 8,
**dadurch gekennzeichnet,**
**dass** der zweite Lichtanteil ebenfalls automatisiert gesteuert ist.

10. Verfahren nach Anspruch 9,
**dadurch gekennzeichnet,**
**dass** der zweite Lichtanteil über einen Anwesenheitssensor gesteuert ist.

11. Verfahren nach Anspruch 9 oder 10,
**dadurch gekennzeichnet,**
**dass** der zweite Lichtanteil umgebungs- bzw. tageslichtabhängig gesteuert ist.

12. Verfahren nach einem der Ansprüche 7 bis 11,
**dadurch gekennzeichnet,**
**dass** der dritte Lichtanteil in seiner Intensität und/oder Richtung durch den Benutzer veränderbar ist.

## Claims

1. An arrangement for room lighting, having
one or several floor lamps (50), which in each case are designed individually or as a whole
a) to emit a first light portion indirectly,
b) to emit a second light portion extensively directly and
c) to emit a third light portion substantially bundled directly,
**characterized in that**
the first light portion is centrally controlled, while, on the other hand, the third light portion is controllable individually by a user.

2. An arrangement for room lighting according to Claim 1,
**characterized in**
**that** the first light portion is controlled depending on the ambient- and daylight.

3. An arrangement for room lighting according to Claim 1 or 2,
**characterized in**
**that** the second light portion is also automatically controlled.

4. An arrangement for room lighting according to Claim 3,
**characterized in**
**that** the second light portion is controlled via a presence sensor.

5. An arrangement for room lighting according to Claim 3 or 4,
**characterized in**
**that** the second light portion is controlled depending on the ambient- and daylight.

6. An arrangement for room lighting according to one of the preceding claims,
**characterized in**
**that** the third light portion can be changed in its intensity and/or direction by the user.

7. A method for lighting a room (100) with one or several for lamps (50), the light of which is emitted in at least three portions, wherein
a) a first light portion is provided for indirect light output,
b) a second light portion is provided for extensive direct light output and
c) a third light portion is provided for direct, substantially bundled light output,
**characterized in that**
the first light portion is centrally controlled, while, on the other hand, the third light portion is controllable individually by a user.

8. A method according to Claim 7,
**characterized in**
**that** the first light portion is controlled depending on the ambient- and daylight.

9. A method according to Claim 7 or 8,
**characterized in**
**that** the second light portion is also automatically controlled.

10. A method according to Claim 9,
**characterized in**
**that** the second light portion is controlled via a presence sensor.

11. A method according to Claim 9 or 10,
**characterized in**
**that** the second light portion is controlled depending on ambient- and daylight.

12. A method according to any one of Claims 7 to 11,
**characterized in**
**that** the third light portion can be changed in its intensity and/or direction by the user.

## Revendications

1. Dispositif pour l'éclairage d'une pièce, comprenant
un ou plusieurs lampadaires (50), qui sont conçus, individuellement ou dans leur ensemble :
a) pour émettre indirectement une première partie de lumière,
b) pour émettre directement, sur une grande surface, une deuxième partie de lumière et
c) pour émettre directement, de manière focalisée une troisième partie de lumière,
**caractérisé en ce que**
la première partie de lumière est contrôlée de manière centrale, tandis que la troisième partie de lumière peut être contrôlée de manière individuelle par un utilisateur.

2. Dispositif d'éclairage d'une pièce selon la revendication 1,
**caractérisé en ce que**
la première partie de lumière est contrôlée en fonction de l'environnement ou de la lumière du jour.

3. Dispositif d'éclairage d'une pièce selon la revendication 1 ou 2,
**caractérisé en ce que**
la deuxième partie de lumière est également contrôlée de manière automatisée.

4. Dispositif d'éclairage d'une pièce selon la revendication 3,
**caractérisé en ce que**
la deuxième partie de lumière est contrôlée est contrôlée par l'intermédiaire d'un capteur de présence.

5. Dispositif d'éclairage d'une pièce selon la revendication 3 ou 4,
**caractérisé en ce que**
la deuxième partie de lumière est contrôlée en fonction de l'environnement ou de la lumière du jour.

6. Dispositif d'éclairage d'une pièce selon l'une des revendications précédentes, **caractérisé en ce que**
la troisième partie de lumière peut être modifiée en ce qui concerne son intensité et/ou sa direction par l'utilisateur.

7. Procédé d'éclairage d'une pièce (100) avec un ou plusieurs lampadaires (50) dont la lumière est émise en au moins parties,
a) une première partie de lumière étant prévue pour une émission de lumière indirecte,
b) une deuxième partie de lumière étant prévue pour une émission de lumière directe sur une grande surface et
c) une troisième partie de lumière est prévue pour une émission de lumière globalement focalisée,
**caractérisé en ce que**
la première partie de lumière est contrôlée de manière centralisée tandis que la troisième partie de lumière peut être contrôlée de manière individuelle par un utilisateur.

8. Procédé selon la revendication 7,
**caractérisé en ce que**
la première partie de lumière est contrôlée en fonction de l'environnement et de la lumière du jour.

9. Procédé selon la revendication 7 ou 8,
**caractérisé en ce que**
la deuxième partie de lumière est également contrôlée de manière automatisée.

10. Procédé selon la revendication 9,
**caractérisé en ce que**
la deuxième partie de lumière est contrôlée par l'intermédiaire d'un capteur de présence.

11. Procédé selon la revendication 9 ou 10,
**caractérisé en ce que**
la deuxième partie de lumière est contrôlée en fonction de l'environnement et de la lumière du jour.

12. Procédé selon l'une des revendications 7 à 11,
**caractérisé en ce que**
la troisième partie de lumière peut être modifiée en ce qui concerne son intensité et/ou sa direction par l'utilisateur.
